# EUROPEAN PATENT SPECIFICATION

(11) **EP 1 749 656 B1**
(45) Date of publication and mention of the grant of the patent: **02.07.2008**
(21) Application number: 06117872.9
(22) Date of filing: 26.07.2006
(51) Int. Cl.: B32B 27/34, B65D 85/76

(54) **A polyester and polyamide blend containing article for packaging a CO2 respiring foodstuff**
Polyester- und Polyamidmischung für Kohlendioxid entwickelndes Lebensmittel
Mélange polyester polyamide pour emballage d'un article dégagent du CO2

(30) Priority: 05.08.2005 US 198447
(43) Date of publication of application: 07.02.2007
(73) Proprietor: CURWOOD, INC., Oshkosh, Wisconsin 54904 (US)
(72) Inventor: Nelson, Kevin Philip, Appleton WI 54914 (US); Harvey, Christopher J, Appleton WI 54915 (US)
(74) Representative: Eddowes, Simon

(56) References cited:
- EP-A- 1 213 326
- EP-A- 1 609 812
- EP-A- 1 609 813
- EP-A- 1 700 878
- EP-A- 1 700 879
- DATABASE WPI Week 200381 Derwent Publications Ltd., London, GB; AN 2003-868397 XP002399977 & JP 2003 088344 A (MITSUBISHI GAS CHEM CO INC) 25 March 2003 (2003-03-25)
- DATABASE WPI Week 200553 Derwent Publications Ltd., London, GB; AN 2005-514964 XP002399978 & JP 2005 178805 A (DAINIPPON PRINTING CO LTD) 7 July 2005 (2005-07-07)
- DATABASE WPI Week 200123 Derwent Publications Ltd., London, GB; AN 2001-220658 XP002399979 & JP 2001 001399 A (UNITIKA LTD) 9 January 2001 (2001-01-09)

## Description

The present invention relates to packaged respiring foodstuffs and improvements in the art of packaging foodstuffs which produce gas, particularly CO₂ respiring foodstuffs, especially cheeses such as for example emmental, gouda and edam.

Many hundreds of different kinds of cheese are made today. The cheese making art is very old with evidence of cheese making as far back as 2300 B.C. Cheese is a cultured milk product i.e. typically a starter culture of bacteria which produce lactic acid as added to milk along with an enzyme called "rennin". Rennin typically comes from rennet from the stomach of a calf or lamb, but may be derived from either animal or plant sources. The acid produced by the bacteria alters the pH of the milk to an acidity which causes a milk protein termed "casein" to coagulate thereby forming curds. Rennin is an enzyme which facilitates curd formation. Typically, both acid produced by bacteria and rennin are used together to form cheese curds and whey. Curds aggregate holding fat and whey in a network of protein. In cheese making this curd formation is usually followed by pouring off the whey and concentration of the curds. To remove additional whey, curds may be cut, pressed, cooked and/or salted to produce what is termed "green" or unripened cheese. Here "green" refers to the youth or lack of aging of the cheese at this point in manufacture. The green cheese may then be aged or ripened for anywhere from a few days to up to four years or more depending upon the cheese variety. This ripening may continue even after packaging, but is generally slowed by holding cheese at lower refrigeration temperatures.

The above description relates to generally known processes for making natural cheeses. Also known are "processed" cheeses which are ground natural cheeses which typically mix unripened and ripened cheeses with other ingredients such as added milk and stabilizers followed by pasteurization and usually packaging while hot.

In forming natural cheeses, specific molds or bacteria may be added just prior to or during ripening to produce particular varieties of cheese having different characteristics such as flavors, aromas, textures and appearance.

For example, blue cheeses are made by inserting a blue green mold, Penicillium roquefort into the interior of the cheese. There are also surface ripened cheeses such as brie and camembert which have an exterior surface coat of a white mold Penicillium camembert. Cheeses such as brick and limburger are ripened by bacteria which are coated on the surface of the cheese. The original starter culture bacteria also may provide distinctive characteristics for ripening. Bacteria added in the starter culture is used for ripening in production of hard and semi-hard cheeses such as parmesan, cheddar and gouda. Swiss type cheeses may also be ripened using the original starter culture, but typically additional bacteria such as Propionibacter shermanii is added to form the "eyes" of the cheese. In emmental or swiss-type cheeses these "eyes" are formed as gas pockets of carbon dioxide (CO₂) which is given off in large amounts by the bacteria which is nourished by lactic acid (which is produced by other bacteria in the starter culture). On grading of swiss-type cheese, cheese graders (which may be licensed by various governmental entities) consider the amount, size and development of eyes as well as the cheese appearance including uniformity of firmness, and its flavor and aroma, shape, freedom from mold, color, size and saltiness.

After ripening, or after molding and pressing (for starter culture ripened varieties of cheeses), cheeses are coated or packaged to prevent physical damage, moisture loss and spoilage (eg. by mite infestation or growth of undesirable molds or bacteria). Many packaging materials and preventive coatings are in use for contact with cheeses including: fat, cloth, wax, metal foils and plastic films and sheets. Waxes and resins in particular have been used for many years to coat dry, hard or semi-hard cheeses such as cheddar, cheshire, gouda, edam and danbo by dipping the cheese into melted wax. Cheese has also been packaged into polymer film under conditions which allow ripening of the cheese in the package.

In discussing plastic film packaging, various polymer acronyms are used herein and they are listed below. Also, in referring to blends of polymers a colon (:) will be used to indicate that the components to the left and right of the colon are blended. In referring to film structure, a slash "/" will be used to indicate that components to the left and right of the slash are in different layers and the relative position of components in layers may be so indicated by use of the slash to indicate film layer boundaries. Acronyms commonly employed herein include:
- PE: -Polyethylene (an ethylene homopolymer and/or copolymer of a major portion of ethylene with one or more "- olefins)
- PET: -poly(ethylene terephthalate)and including, unless otherwise specified, both the homopolymer reaction product of ethylene glycol and terephthalic acid as well as polymerization products (copolymers) where a portion of the reactants are replaced by either other glycols and/or by aliphatic or aromatic dicarboxylic acids e.g. where a portion of the ethylene gycol is replaced with diethyleneglycol (DEG) or cyclohexane dimethanol (CHDM), and/or where a portion of the terephthalic acid is replaced by isophthalic acid.
- MXD6: -poly(m-xylylene adipamide) and including, unless otherwise specified, both the homopolymer reaction product of m-xylylenediamine and adipic acid as well as polymerization products (copolymers) of m-xylylenediamine and adipic acid where a portion of the adipic acid is replaced with another aliphatic or aromatic dicarboxylic acid e.g. isophthalic acid
- EVA: -Copolymer of ethylene with vinyl acetate
- PVDC: -Polyvinylidene chloride (also includes copolymers of vinylidene chloride, especially with vinyl chloride)
- EVOH: -A saponified or hydrolyzed copolymer of ethylene and vinyl acetate
- EAA: -Copolymer of ethylene with acrylic acid

Various published patent documents disclose different types of cheese packages, packaging films and processes for packaging.

Biaxially oriented film comprising a blend of polyester such as PET with MXD6 has been produced via the double bubble process.

U.S. Patent 1,925,443 (Gere) discloses flexible wrappers and a process for packaging uncured cheese wherein the cheese ripens or cures in the package. This patent states that "The package must be of moisture-proof and impervious material, and it must be so sealed as to exclude air, but at the same time, it must provide for the escape of excess carbon dioxide evolved in the course of fermentation". Preferred wrappers include "cellulose viscose" or "cellulose acetate" which may subsequently be coated with paraffin. Disadvantageously, manufacture of these films is complex, time consuming and expensive. Also, it is difficult to adjust CO₂ permeabilities for use on different cheeses.

U.S. Patent 2,494,636 (Stine) discloses a method of making emmental (swiss) cheese which comprises applying a coat of extensible, flexible, fluid proof sealing material to the exterior surface of the uncured cheese to seal the surface prior to eye development followed by curing under controlled pressure in an expandable mold. Suitable sealing materials are said to be wax, or a wrap of an elastic-flexible material such as cellophane, the inner surface of which may be coated with a flexible and elastic wax. The packaging materials disclosed here have the same disadvantages as described above for those materials disclosed in the Gere patent.

U.S. Patent 2,871,126 (Smith et al.) discloses a method for manufacturing emmental type cheese which is also known as Swiss cheese. This patent refers to use of thermoplastic film as a moisture proof, fluid-proof material for wrapping the cheese after the brine step for curing in molds. A disadvantage of this disclosed film is that the moisture proof wrapper does not have an adjustable CO₂ permeability.

U.S. Patent 2,813,028 (Jackson, Jr.) discloses processes for producing cheddar cheese. In one process green cheddar curd is extruded into preformed wrappers which may be made of cellulose based films such as cellophane, rubber chloride based films or polyvinylidene chloride based films such as saran. It is preferred that the films have the following characteristics:
(1) substantially moisture proof, i.e., having relatively low moisture vapor transmission rate to prevent drying out
(2) slightly permeable to carbon dioxide to permit normal curing
(3) cling or stick to cheese to prevent mold growth
(4) slightly extensible to improve cling between wrapper & cheese by overfilling
(5) transparent or translucent to improve appearance.

The disclosed films suffer from disadvantageously, controlling CO₂ permeability by slightly opening the ends of the package. This removes the physical, moisture and oxygen barrier at those openings thereby subjecting the cheese to the deleterious effects of excessive oxygen, loss of moisture and exposure to the environment.

Canadian Patent Application 2,053,707 (Mueller) discloses laminate films for packaging soft cheeses such as camembert and brie. Known materials for packaging such soft cheese is said to include polyethylenes with and without ethylene vinyl-acetate copolymers, polypropylenes, nylon/polyethylene laminates, and polyester/polyethylene laminates. Oxygen and carbon dioxide transmission rates are said to be "of primary importance in the packaging of many soft cheeses, as well as other foods items which require a packaging material of high gas permeability such as many fruits and vegetables". (See page 1). The disclosed film of Mueller comprises a first film component (which is perforated) laminated to a gas permeable layer which include at least one layer comprising butadiene styrene copolymers. Relative gas and moisture transmission rates are said to be determined by the size and number of perforations in the first layer as well as the thickness and permeability of the second layer.

In the examples, permeabilities of the film of Example 3 are stated as follows:
"The water vapor transmission rate averaged about 2.73 g/100 in², 24 hr. at 100EF and 100% RH. The oxygen transmission rate averaged about 4858.9 cm³/m² atm., 24 hrs. at 73EF. The carbon dioxide transmission rate averaged about 30204.0 cm³/m², atm., 24 hrs. at 73EF."
These films have a very high permeability to oxygen as well as carbon dioxide and such extremely high oxygen permeability while perhaps suitable for mold cured cheeses is undesirable for hard or semi-hard cheeses such as emmental, gouda, edam and the like due to the possibility of facilitating undesirable mold growth.

Canadian Patent Application No. 2,050,837 (Gillio-Tos et al.) discloses polymer mixtures of polyvinylidene chloride and polyethyloxazoline which are purportedly useful in forming monolayer or multilayer films having increased moisture permeability with no substantial change in permeability to oxygen or carbon dioxide. This combination of properties purportedly is "indicative of utility in packaging, for example, medical applications, casings and the curing of non-gassing cheeses such as parmesan" (page 3, last paragraph). A table shows moisture, oxygen and carbon dioxide permeability rates. These films are made from chlorinated polymers which are increasingly more difficult to dispose of or recycle as further discussed below.

EP 457 598 (Shah et al.) discloses a polyamide based multilayer film for packaging cheese. This polyamide film is disclosed as having "an oxygen transmission rate of no more than 500 cc/m², 24 hrs., atm and a carbon dioxide transmission rate of at least 750 cc/m², 24 hrs., atm.". Example 5 purportedly discloses a 1 mil (25.4 micron) thick biaxially oriented film having a core layer comprising a blend of about 70% EVOH and about 30% of a polyamide in combination with polypropylene or propylene copolymer based outer layers and this film has a reported shrinkage at 220EF (104EC) of 24% in two directions. The core layer is about 14% of the thickness of the film which would be 0.14 mil (3.6 microns). Example 8 purportedly had outer layers of 90% linear medium density polyethylene blended with 10% of an EVA-based masterbatch and a core layer which was a blend of 70% nylon and 30% EVOH, with the core layer comprising 25% of the total film thickness.

Various monolayer and multilayer thermoplastic films have been commercialized for packaging cheeses. Three to five layer films are common. Typical structures include: EVA/PVDC/EVA, EVA/EVA/PVDC/EVA, lonomerlEVA/PVDC/EVA, and variations thereof where ethylene based polymers are blended into one or more of the EVA layers. Some cheese packaging films are heat shrinkable at 90EC and others are not. Some of the nonshrinking films have an oxygen barrier comprising one or more layers of nylon or EVOH or a blend of EVOH with nylon. Such known nonshrinking films include structures of the type EVA:PE/Nylon, EVA:PE/Nylon/EVOH/Nylon/EVA:PE, EVA:PE/PVDC/Nylon, EVA:PE/EVOH/Nylon, and EVA:PE/Nylon/EVA. The known nonshrinking EVOH containing films generally have a relatively thick EVOH containing layer, generally greater than 0.5 mil (12.7 microns).

Of the foregoing nonshrinking films, those containing EVOH have a typical oxygen permeability of less than 10 cm³ per m² at 1 atm, 0% relative humidity and 23° C. and are considered high barrier films. The terms "barrier" or "barrier layer" as used herein mean a layer of a multilayer film which acts as a physical barrier to gaseous oxygen molecules. Physically, a barrier layer material will reduce the oxygen permeability of a film (used to form the bag) to less than 70 cm³ per square meter in 24 hours at one atmosphere, 73EF (23° C.) and 0% relative humidity. These values should be measured in accordance with ASTM standard D-1434.

Also known are films suitable for packaging cheese that are heat shrinkable at 90° C. which contain polyamide or a blend of EVOH and polyamide. Axially stretched, especially biaxially stretched, films which are "heat shrinkable' as that term is used herein have at least 10% unrestrained shrinkage at 90° C. (10% in both the machine direction (M.D.) and transverse direction (T.D.) for biaxially stretched films). Such known films include structures of the following types: lonomer/PE/Nylon, lonomer/EVA/Nylon, EAA/Nylon:EVOH/lonomer, and PE/EVOH:Nylon/PE. Some of these EVOH containing heat shrinkable films have an oxygen permeability in the high barrier range. A few heat shrinkable, EVOH-containing films have permeabilities which are outside the high barrier range such as e.g. about 30-35 cm³/m² or even as high as 150-170 cm³/m² at 1 atm, 0% relative humidity and 23° C..

U.S. Patent Nos. 6,316,067 and 6,511,688 (Edwards et al.) disclose multilayer packaging for CO₂ respiring products such as emmental cheese where permeability to CO₂ is designed into the film by adjusting the thickness and composition of a polyamide:EVOH blend oxygen barrier layer. These patents further disclose that high barrier films (whether shrinkable or not) which are very good oxygen barriers typically also have very low carbon dioxide permeabilities which may be disadvantageously low for packaging respiring articles such as cheeses, particularly hard and semi-hard cheeses. Packaging films which have low permeability to CO₂ are subject to pillowing when hermetically sealed around an enclosed respiring article. If the respiration rate of the enclosed article exceeds the CO₂ transmission rate for permeating the enclosing film, "pillowing" will occur. Pillowing or "ballooning" refers to the inflation of the sealed film which typically causes the film surface to move away and out of contact with much of the surface of the enclosed article. For such respiring articles as foodstuffs, e.g., hard and semi-hard cheeses, it is perceived that some customers view pillowing as a defect and avoid purchase of refrigerated foodstuffs having a pillowed container. Furthermore, it is believed that retention of high concentrations of CO₂ about a respiring foodstuff may possibly adversely affect the curing process itself, possibly delaying development of the desirable characteristics of the microbiological processes including, e.g., full flavor and aroma development.

Also, the prior art EVOH-containing high permeability cheese films have several disadvantages for packaging respiring cheeses especially for retail display packaging of, for example, shingled cheese slices or chunks, including one or more of the following: undesirable shrink values, an undesirably narrow heat sealing range, use of expensive resins such as ionomer in the other layers, slow throughput packaging rates, unsuitable machinability for various types of packaging equipment, undesirable product deforming characteristics, and poor optical properties such as high haze, low gloss and/or streaks or lines which detract from the film appearance.

As shown by the above, many different multilayer film structures have been and continue to be commercially made and used to package cheeses. These structures all suffer from various disadvantages, especially with respect to packaging "respiring" cheeses, i.e., those cheeses which give off CO₂ gas, for retail display and sale using typically employed flow wrap equipment.

For example, shrink films may crush or otherwise deform cheese slices, shingle type packs and/or small chunks of cheese, and shrink films have lower packaging productivity due to slower throughputs, e.g., in flow wrap equipment relative to better machining, dimensionally stable nonshrink films. Prior art polyester containing or polyamide containing films either have undesirably low CO₂ permeabilities or undesirably high oxygen permeabilities. Also, PVDC containing films having desirably higher levels of CO₂ permeabilities also undesirably require that the PVDC layer be heavily plasticized to achieve gas permeability. Such plasticizers may adversely affect other film properties including processability, optical properties, and orientability.

Also, recycling of PVDC polymers is difficult, particularly where the waste polymer is mixed with other polymers having different melting points. Attempts to remelt film containing PVDC frequently results in degradation of the PVDC component.

### Summary of the Invention

It is an object of the invention to provide a heat shrink multilayer film having a high carbon dioxide permeability and relatively low oxygen permeability.

It is still another object of the invention to provide a film having low permeability to water vapor.

It is another object of the invention to provide a multilayer film containing a polyester and polyamide blend having high carbon dioxide permeability in combination with low oxygen permeability.

It is a further object of the invention to provide a CO₂ permeable multilayer film having an polyester:polyamide blend layer and capable of forming desirably strong heat seals with a broad heat sealing formation range.

It is yet another object of the invention to provide a dimensionally stable multilayer film having good machinability and good optical properties.

It is a further object of the invention to provide a chlorine-free packaging film.

It is an object of the invention to provide a film for packaging respiring articles, particularly cheeses, which have reduced pillowing of the package after vacuum packaging.

It is another object of the invention to provide a packaged cheese using a multilayer film having an oxygen permeability retarding layer which is at the same time highly permeable to carbon dioxide.

It is yet another object of the invention to provide a film suitable for packing cheese slices or chunks on flow wrap equipment at high rates of speed.

The above and other objects, benefits and advantages of the invention will be apparent from the disclosure below which is exemplary and nonlimiting. It is not necessary that each and every object listed above be found in all embodiments of the invention. It is sufficient that the invention may be usefully employed.

According to the present invention a gas releasing foodstuff especially CO₂ respiring cheese, is packaged in a multilayer, thermoplastic, flexible film of at least two layers having a first gas permeability controlling layer which comprises a blend of about 5-15 weight percent of a polyamide homopolymer or copolymer of poly(m-xylylene adipamide) (hereinafter MXD6) and at least 50 weight percent, preferably at least 75 wt. % of a polyester such as poly(ethylene terephthalate)(hereinafter PET), and a second heat sealing layer, preferably of polyolefin.

In one embodiment of the invention, a packaged respiring natural cheese such as emmental, jarlsberg, edamer, butterkase, gouda or edam is provided where a polyester:MXD6 polymer blend layer of the film has the relative amounts of polyester and nylon adjusted to provide the desired level of CO₂ permeability and O₂ barrier properties. Such a film need not be perforated, and preferably is unperforated, yet a high level of CO₂ permeability may be obtained without perforations.

### Brief Description of the Drawing

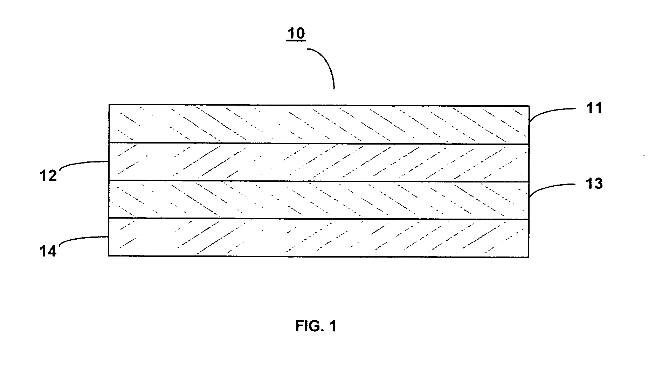

Fig. 1 is a schematic of a multilayer film according to the present invention.

### Detailed Description of the Invention

While many packaged food products benefit from the perfect exclusion of gas transport through the package wall, others require free interchange of gas through the bounds of the package. There also exists a middle ground where controlled gas transport is the most advantageous means to maintain the quality of the packaged product throughout its useful lifetime. An exemplary food type that may benefit from a controlled or intermediate barrier to gas permeation is the class of cheeses that continues to evolve carbon dioxide even after packaging. One of the most common types of cheese that belongs to this class is emmental otherwise known as Swiss cheese. In this case, it is desirable to allow the evolved carbon dioxide to permeate through the package boundary to prevent an undesirable increase in the gas pressure within the package. An undesirable pressure increase leads to inflation or swelling of the package that may be interpreted as undesirable by a consumer. Still, it is important to interfere with the free ingress of atmospheric oxygen into the package. Oxygen may promote the growth of unwanted mold or bacteria. Further, oxygen may undesirably affect the taste and odor of the cheese product via the formation of oxidized chemical species.

To protect the food product from unsatisfactory oxidation or biological growth while simultaneously allowing carbon dioxide permeation, it has been found that a film made from a blend of a polyester such as polyethylene terephthalate (PET) and a particular type of polyamide viz meta-xylylene adipamide (MXD6) can be fabricated to give appropriate gas permeation properties. Additionally, the ratio of blend components and the resultant film's thickness can be manipulated such that a range of permeabilities is easily achievable. This ability to tailor permeability makes it possible to manufacture films especially suited for the carbon dioxide evolution and oxidation protection requirements of specific food products.

It is known to use biaxially oriented polyamide films (biax nylon, primarily produced from type 6 polyamide) as the primary barrier layer in a package to achieve a compromise in gas barrier such that a suitable amount of oxygen permeation resistance is achieved to provide protection from mold growth and product oxidation while carbon dioxide transmission is satisfactorily high such that the package does not swell due to internal gas pressure rise. However, certain disadvantages are apparent with the use of biax nylon. The manufacture of biaxially oriented nylon is rather complex owing to the chemical make-up of the polyamide. This manufacturing complexity somewhat limits the breadth of commercial film producers to the extent that, over time, there have been occasional availability shortages.

Additionally, biax nylon may exhibit significant physical property changes as the humidity in its immediate environment changes. Flex crack resistance and coefficient of friction are examples of properties that are affected by ambient humidity.

Another issue that may complicate the fabrication of packaging films that contain biax nylon is the need for special inks or coatings to achieve suitable adhesion to the film surface. Since the use of biax nylon is somewhat special when compared with other commonly used packaging films like biaxially oriented polyethylene terephthalate (OPET), special ink chemistry may be required to provide serviceable adhesion to the film's surface. This can add complexity and cost to the logistical operation of a manufacturing plant. The ink adhesion issue may be addressed by coating or "priming" the surface of the biax nylon during or after its manufacture but this too adds cost and complexity to its manufacture.

From the perspective of cost, biax nylon is one of the most expensive of the commonly used biaxially oriented packaging film components. Two less expensive films, biaxially oriented polypropylene (BOPP) and OPET, owe their lower cost to lower material costs (polypropylene is less expensive than polyethylene terephthalate which is less expensive than polyamide type 6) and ease of manufacture. The commercial manufacture of BOPP and OPET is more common as well.

A solution to the gas permeability problem that complicates the packaging of respiring food products may also be resolved through the use of barrier coated films. For example, it is known to place barrier coatings based on polymers containing vinylidene chloride onto OPET or BOPP to achieve suitable gas diffusion rates. This route, though, either adds cost due to the additional coating step or complexity if the coating operation is combined with the biaxially oriented film fabrication process.

To address the aforementioned issues, it has been discovered that a biaxially oriented film based primarily on PET may be manufactured to achieve the gas permeability desired for respiring food products. An essential secondary film component, MXD6, may be successfully added to the polyester e.g. PET via melt blending to tailor the gas diffusion property of the film such that it is fitting for a specific food product. Additionally, the thickness of the film may be manipulated to provide added control over the gas permeability of the film.

In accordance with the present invention it is expected that a film comprising polyester such as PET with MXD6 can be manufactured on tenter frame-style orientation equipment that is suitable for the production of common OPET films. Thus, the present invention resolves the complexity issue involved in the manufacture of biax nylon.

The coefficient of friction (COF) of biax nylon tends to rise as the polyamide absorbs environmental water. The fabrication of packaging films may be made more difficult due to the water-dependence of the biax nylon's COF. An example of a problem that may result from the effect of water on the film is the introduction of wrinkles into the film. Further, consistent transport of the packaging film through package fabrication and filling equipment may be compromised by high or variable COF. This may affect the sliding property of the film and result in misshapen packages or misaligned seals or closures. OPET is much less sensitive to humidity-induced tribological changes than biax nylon so it is expected that predominantly PET blends with MXD6 will behave more like OPET than biax nylon. It is expected that the blends described in this disclosure will resolve the inconsistent COF issue exhibited by biax nylon.

It is known that biax nylon performs better than OPET with respect to flex-induced cracking. To address this potential limitation, a further improvement to the inventive blend is contemplated by the instant invention. A third component may be added to the polyester:nylon film blend formulation to dramatically improve resistance to OPET's propensity to crack during repeated flexing. The flex crack resistance enhancing material used was an atactic copolymer of ethylene and propylene. This technique resolves the flex cracking issue although the complexity of the blend is increased.

Because the disclosed film is produced from a blend that is predominantly PET, it is expected that ink compositions suitable for decorating conventional OPET will function similarly on the blend film. This will eliminate the need for a biax nylon-specific ink chemistry and allow for more streamlined printed film manufacture.

Nylon 6 for the manufacture of biax nylon carries a current cost approximately over 50% higher than PET costs. The gas barrier-enhancing agent, MXD6,is expensive, however there is a reasonable likelihood that the inventive film produced from the PET/MXD6 blend will be less costly than biax nylon.

The blend compositions defined here can be used to fabricate films that exhibit tunable gas barrier transmission rates. It is expected that the blends may be fabricated into films by a number of common manufacturing techniques including those techniques that introduce molecular orientation in at least one direction. Those films may be joined with other layers to develop a composite film structure suitable for a specific end use. The resultant composite film structures may be used to package articles, especially food articles, that benefit from tailored gas permeability.

It is anticipated that films produced from the PET/polyamide blend can be further modified to improve flex crack resistance. The permeability target may be further achieved by a more complex blend of PET, polyamide and inorganic particles of a particular shape. A blend of particularly effective inorganic particles and a polymer is commonly known as a nanocomposite. It is also expected that the film produced from the blend can be modified by the inclusion of lubricants, antiblocking agents, antioxidants, compatibilizers, pigments, antistatic agents, etc. to achieve desired effects. The blend may be simultaneously extruded with other materials to form a multilayer film via a coextrusion process. A film comprising the blend may be joined to other materials that are necessary to provide all the features desirable for a particular packaging application. Examples of these features include heat sealability, decoration, openability, reclosability, et al.

The inventive film and package of the present invention may be used as a CO₂ permeable, oxygen barrier film for holding a respiring natural cheese during curing or for packaging for sale of such a cheese after the predetermined curing period. After curing of a cheese such as emmental (commonly known in the United States as "Swiss" cheese), the cheese which may be a large block of up to forty pounds (18.2 Kg) or more is often cut up into smaller sizes. Commercial establishments such as hotels, restaurants, institutions or deli counters often use 10 or 7 pound (4.5-3.2 Kg) portions or less. For sale to individual consumers, retail display packages of 1-2 pounds or less are commonly sold. Forty pound (18.2 Kg) blocks of cheese are frequently packaged in thermoplastic bags having a flat width of 18-22 inches (46-56 cm) while smaller weights are typically packaged in bags having a smaller flatwidth, e.g., of less than 10 inches (25.4 cm) for weights of 5 pounds (11 Kg) or less. The present invention may be employed as bags in the various typical sizes, but has special utility for packaging smaller retail take home packages of chunk or sliced cheese having a weight of 1-2 pounds or less which are typically packaged by flow wrap equipment which is well known in the art and commonly used to commercially package small amounts of cheese for delivery to retail outlets such as supermarkets and grocers for display of individual packages for retail consumer sale. This flow wrap packaging process may provide an initial gas flush of carbon dioxide which is soon absorbed by moisture in the cheese to provide a non-pillowed package in which the film is in intimate contact with the packaged product. However after a period of time normal microbial activity produces excess carbon dioxide which must permeate through the package or a "pillowed" appearance will result which consumers find undesirable.

By "flatwidth" is meant the transverse width of a flattened tubular film. The flatwidth is also equal to 1/2 of the circumference of the tubular film.

The invention has particular utility in packaging natural cheese. Cheese as it is produced from milk with curds that are only cut or pressed is said to be natural (as further discussed above) and may be contrasted with "process" cheese which is made from natural cheese, e.g., by grinding, heating and pasteurizing natural cheese with additives which may include milk, water, emulsifiers and/or preservatives. Pasteurization stops or inhibits the aging/ripening process which gives off CO₂. Therefore, the CO₂ permeable films of the instant invention are particularly advantageous for enclosing natural respiring cheeses because the inventive films allowed CO₂ to escape by permeation across the film wall. At the same time the present films and bags made therefrom are much less permeable to oxygen and this is an advantage because the presence of large amounts of oxygen is believed to facilitate growth of undesirable molds.

The present invention is particularly well adapted to packaging respiring cheeses, especially cheeses having eyeholes. Eyeholes in cheese are produced by pockets of carbon dioxide (CO₂) which is generated by CO₂ producing bacteria such as Propionibacter shermanii.

The invention may be suitably employed with hard cheeses including those having eyeholes which are typically round such as emmental, jarlsberg, gruyere, herregaardsost, danbo, asiago, viereckhartkase, bergkase and samsoe, as well as those cheeses which typically have irregular holes such as cheshire, maribo, svecia and manchego, and those cheeses which generally have no or few holes such as cheddar, and provolone. The invention may also be suitably employed with semi-hard cheeses including those having small eyeholes such as gouda, edam, fontina, raclette and those typically having irregular eyeholes such as trappist, tilsit and havarti, and even those which typically have no holes such as butter cheese (butterkase), cantal, St. Paulin and feta.

Advantageously, both the permeability controlling layer thickness and the relative amounts of polyester polymer and nylon polymer in the blend may be adjusted according to the present invention to provide films and packages having various permeabilities to gases including CO₂. An example of suitable CO₂ permeabilities for various cheeses is given in Table A below.

**Table A**

| | |
|---|---|
| High CO₂ Permeability | (400-600 cm³/m² at 5° C. and 0% RH per 24 hr at 1 atmosphere) |
| emmental (Swiss) | |
| jarlsberg | |
| herregaaddsost | |
| svecia | |
| maribo | |
| samsoe | |
| | |
| Medium CO₂ Permeability | (200-400 cm³/m² at 5° C. and 0% RH per 24 hr at 1 atmosphere) |
| raclette | |
| | |
| Low CO₂ Permeability | (100-200 cm³/m² at 5° C. and 0% RH per 24 hr at 1 atmosphere) |
| cheddar | |
| gouda | |
| edam | |
| edamer | |
| butterkase | |

Embodiments of the present invention for use in high CO₂ permeability applications will generally use a core layer having a greater amount of polyester (>50 to 95 wt. %) and lesser amounts of MXD6 copolymer (5-10 wt.%) to produce a film having higher CO₂ permeability. Preferably the oxygen permeabilities of the high CO₂ permeability films of the present invention will be less than 800 cm³/m² and greater than 500 cm³/m² at 24 hours, 1 atmosphere, 0% relative humidity and room temperature (20-23° C.).

The appropriate blend proportions to achieve the desired level of gas permeability may be determined in view of the present specification without undue experimentation.

Embodiments of the present invention for use in medium or low CO₂ permeability applications may adjust the ratio of MXD6 to polyester to adjust and control the CO₂ permeability of the film to a desired level. For medium CO₂ permeability applications, the oxygen transmission rate is also 40 cm³/m² or higher at 24 hours, 1 atmosphere, 0% relative humidity and at room temperature (about 20-23° C.).

In addition to changing the proportion of the blended amounts of polyester and MXD6 nylon in the layer to adjust the gas e.g. CO₂ permeability of the films of the invention, the thickness of this layer may also be varied from about 0.36 to about 1.0 mils (9-25 microns). Also, while it is preferred that this blend layer consist essentially of nylon and polyester, the present invention recognizes the possibility that the other additives including polymer,s e.g., other nylons may be blended into the core layer to purposefully affect core layer properties such as gas permeability or moisture resistance.

Advantageously, the present invention permits ripening of CO₂-producing cheeses in a thermoplastic multilayer film having a blend of polyester with nylon with little or no weight loss during ripening. The moisture barrier properties of the film minimize weight loss from moisture permeation through the film after packaging. Films having water vapor transmission rates less than 30 grams per square meter per 24 hours at 100° F. (37.8° C.) under ambient pressure at (~1 atmosphere) have desirably low weight loss from moisture permeation through the film.

Also, the oxygen barrier properties of the inventive film reduces or eliminates losses of cheese caused by mold. Product losses and sensory defects due to mite infection and mold growth are also prevented by use of the film according to the present invention. The present invention may be beneficially used as a ripening film particularly for rindless cheese where rinds having surface molds or bacteria to give particular flavor and odor sensory characteristics to the cheese are not employed. The inventive films and bags are particularly useful for packaging cheese, but may also be employed as packaging for a wide variety of food and non food articles.

Some of the benefits of the inventive film include: relatively low permeability to oxygen and water vapor, particularly in combination with higher CO₂ permeability; controlled high permeability to carbon dioxide without perforations in the film; resistance to degradation by food acids, salts and fat; good heat sealability especially over a broad voltage range on commercial sealers; low levels of extractables with compliance with governmental regulations for food contact; delamination resistance; low haze; high gloss; very easy to remove from an enclosed foodstuff such as cheese; does not impart off tastes or odors to packaged food; good tensile strength; a surface which is printable; and good machinability particulary for flow wrap equipment, higher packaging productivity than for prior art shrink films.

Advantageously, a preferred embodiment of the invention has a high CO₂ permeability at 5° C. with relatively low O₂ and low water vapor permeabilities in combination with dimensional stability and machinability. Also, preferred films are heat sealable over a broad voltage range.

The invention in all of its embodiments comprises or utilizes a multilayer thermoplastic polymeric flexible film of 10 mils (254 microns) or less having layer containing a blend of polyester and nylon. This polyester:nylon blend layer controls the gas permeability of the film. Such films will preferably have a thickness of about 2-2.5 mils (50.8-63.5 microns) although suitable films e.g. for packaging foodstuffs as thick as 4 mils (101.6 microns) or as thin as 1 mil (25.4 microns) may be made. Typically films will be between about 1.5-3 mil (38.1-76.2 microns). Especially preferred for use as films for packaging articles including foodstuffs, e.g. cheeses, are films wherein the multilayer film has a thickness of between about 2 to 2.5 mils (50.8 - 63.5 microns). Such films have good abuse resistance and machinability. Films thinner than 2 mils are more difficult to handle in packaging processes. Advantageously, preferred films are heat shrinkable. Preferred films may also provide a beneficial combination of one or more or all of the properties including high gloss, dimensional stability, good humidity stability of gas barrier and permeability properties, good coefficient of friction, good printability, ability to use low cost inks, good machinability, good mechanical strength and good relatively low oxygen barrier and water barrier properties with desirably high CO₂ permeabilities.

The expression "ethylene vinyl acetate copolymer" (EVA) as used herein refers to a copolymer formed from ethylene and vinyl acetate monomers wherein the ethylene derived units (monomer units) in the copolymer are present in major amounts (by weight) and the vinyl acetate derived units (monomer units) in the copolymer are present in minor, by weight, amounts.

The expression very low density polyethylene ("VLDPE") sometimes called ultra low density polyethylene ("ULDPE"), refers to linear polyethylenes having densities below about 0.915 g/cm³ and according to at least one manufacturer, possibly as low as 0.86 g/cm³. This expression does not include ethylene alpha olefin copolymers of densities below about 0.90 g/cm³ with elastomeric properties and referred to as elastomers. Some elastomers are also referred to by at least one manufacturer as "ethylene alpha olefin plastomers", but other manufacturers have characterized VLDPE as an ethylene "-olefin with plastomeric properties. However, as hereinafter explained, ethylene alpha elastomers or olefin plastomers may be advantageously used in the practice of this invention as a minor constituent in certain layers of this multilayer film. VLDPE does not include linear low density polyethylenes (LLDPE) which have densities in the range of 0.915 - 0.930 gm/cm³. VLDPE's as the term is used herein may be made by solution or fluidized bed processes using a variety of catalysts including Ziegler-Natta or metallocene catalysts.

VLDPE comprises copolymers (including terpolymers) of ethylene with alpha-olefins, usually 1-butene, 1-hexene or 1-octene, and in some instances terpolymers, as for example of ethylene, 1-butene and 1-hexene. A process for making VLDPEs is described in European Patent Document publication number 120,503 whose text and drawing are hereby incorporated by reference into the present document.

Suitable VLDPEs include those manufactured by Dow Chemical Company, Exxon Chemical Company and Union Carbide Corporation.

As used herein, the term "polyester" refers to homopolymers or copolymers having an ester linkage between monomer units which may be formed, for example, by condensation polymerization reactions between a dicarboxylic acid and a glycol. The dicarboxylic acid may be linear or aliphatic, i.e., oxalic acid, malonic acid, succinic acid, glutaric acid, adipic acid, pimelic acid, suberic acid, azelaic acid, sebacic acid, and the like; or may be aromatic or alkyl substituted aromatic, i.e., various isomers of phthalic acid, such as paraphthalic acid (or terephthalic acid), isophthalic acid and naphthalic acid. Specific examples of alkyl substituted aromatic acids include the various isomers of dimethylphthalic acid, such as dimethylisophthalic acid, dimethyforthophthalic acid, dimethylterephthalic acid, the various isomers of diethylphthafic acid, such as diethylisophthalic acid, diethyforthophthalic acid, the various isomers of dimethylnaphthalic acid, such as 2,6-dimethylnaphthalic acid and 2,5-dimethylnaphthalic acid, and the various isomers of diethylnaphthalic acid. The glycols may be straight-chained or branched. Specific examples include ethylene glycol, propylene glycol, trimethylene glycol, 1,4-butane diol, neopentyl glycol and the like. In one example a preferred embodiment of this invention, the first layer comprises polyethylene terephthalate copolymer and most preferable, biaxially-oriented polyethylene terephthalate copolymer. Polyesters especially PET is commercially available in resin form.

In one embodiment of this invention, the polyester component may have a melting point of at least about 240° C. or higher to facilitate coextrusion and tubular orientation. Oriented films according to the present invention made be made by well known methods in the art including tubular double bubble methods as well as cast extrusion and tentering extrusion and orientation methods. Polyester polymers having both low and high viscosities may be employed. Higher viscosity polyesters may advantageously be employed in tubular orientation processes and it is expected that processability and orientation would be facilitated; viscosity may also have an effect on gas permeabilities.

It has been discovered that the inventive film with all of its advantages can only employ nylon MXD6 as the polyamide in the polymer blend of the gas permeability controlling layer. MXD6 is a polymer of m-xylylenediamine and adipic acid (poly (m-xylylene adipamide)). The term "MXD6" as used herein includes, unless otherwise specified, both the homopolymer reaction product of m-xylylenediamine and adipic acid as well as polymerization products (copolymers) of m-xylylenediamine and adipic acid where a portion of the adipic acid is replaced with another aliphatic or aromatic dicarboxylic acid, e.g., isophthalic acid.

Other nylons such as nylon 6 or nylon 66 may also be employed in the films of the present invention in additional layers or in blends. Nylon 6 is polyepsilon caprolactam. Nylon 66 is the polymer derived from adipic acid and hexamethylene diamine.

A preferred nylon is a nylon MDX6 having a melting point of about 240° C., a T_{g} of 75° C., and a rheometer melt viscosity of 10000 poise at 260° C., and which is commercially available from Mitsubishi Gas Chemical Company, Inc., Tokyo, Japan as grade 6007.

Advantageously, films of the present invention may have low haze e.g. less than 10% and preferably less than 5%, and high gloss, e.g., greater than 65 Hunter Units (H.U.) and preferably greater than 75 H.U.

The inventive article is preferably an annealed biaxially oriented polyester:polyamide film having a polyolefin heat seal layer. These two essential layers provide heat sealability and controlled permeability. A first adhesive layer may be used to attach these two layers together. Optionally additional layers may be included between or on either side of the two essential layers (although at least one surface layer must be heat sealable). In a preferred embodiment a biaxially oriented polypropylene layer is included in the structure which preferable has a structure of polyester:MXD6/adhesive layer/OPP/polyolefin heat seal layer.

It is contemplated according to the present invention that tubular films having more than two layers may be constructed and that such additional layers may be disposed as additional intermediate layers lying between the permeability controlling layer and the heat seal layer, or these additional layers may comprise one or more surface layers and comprise either or both the interior or exterior surface of the tube. Preferably, the first outer layer will comprise the inner or interior surface layer of the tube where in use it will contact a foodstuff encased by the tube. Beneficially, this first outer layer will be heat sealable to facilitate formation of bags and hermetically sealed packages. Advantageously, the first outer layer as the interior or inner surface layer will, when used to package foodstuffs, be suitable for contact with foodstuffs containing protein, water and fat without evolving or imparting harmful materials, off tastes or odors to the foodstuff. In a preferred embodiment, the invention provides a film suitable for packaging cheeses, particularly cheeses which give off carbon dioxide gas (also termed "respiring") while packaged, such as emmental (swiss), gouda or edam. Beneficially, in the present invention the first outer layer may be the interior surface layer and may consist essentially of an ethylene vinyl acetate copolymer such as an EVA having about 10.5% by weight of vinyl acetate (10.5% VA. Advantageously, the heat sealing layer and indeed the entire film may be free of ionomer polymer yet provide entirely satisfactory performance without the added expense of using costly ionomer resin. If desired, an ionomeric resin may be used either alone or blended in one or more of the layers but such use is unnecessary to produce a film suitable for packaging respiring cheeses.

Also, it is preferred that the second layer, i.e., the permeability blend layer of polyester:nylon will comprise an exterior surface of the tube or bag. As the exterior surface layer of the tube or bag, the outer layer should be resistant to abrasions, abuse and stresses caused by handling and it should further be easy to machine (i.e., be easy to feed through and be manipulated by machines e.g. for conveying, packaging, printing or as part of the film or bag manufacturing process).

Advantageously, the first layer may be predominantly comprised of ethylene homopolymers or copolymers having at least 50% or higher ethylene content and may also be free of polypropylene or propylene copolymers having a propylene content of 50% or more.

Films made according to the present invention are -heat shrinkable and may be oriented either uniaxially or biaxially by axial stretching at temperatures low enough to produce low temperature high shrink films. Such heat shrinkable films will have at least 10% shrink in at least one direction at 90° C., but preferably will have at least 20% shrink at 90° C. in at least one direction (preferably both directions) and advantageously may have at least 30% shrink at 90° C. in at least one direction, but preferably both M.D. and T.D. directions, and beneficially may have at least 15% (more preferably at least about 20%) shrink at 80° C. in at least one and preferably both M.D. and T.D. directions.

Beneficially, in the present invention may use an intermediate adhesive layer. In a preferred embodiment the polyester:nylon blend layer is directly adhered to a first adhesive layer which in turn is directly adhered respectively to an oriented polypropylene layer and a heat sealable polyolefin layer. In this most preferred embodiment the film article consists essentially of at least four polymeric layers viz., the inner blend polyester:MXD6 layer, the first adhesive layer, the OPP layer, and the outer heat seal layer. This preferred embodiment provides a desirable combination of properties such as low moisture permeability, relatively low O₂ permeability in combination with relatively high CO₂ permeability, high gloss, good mechanical strength, chlorine-free construction, multilayer packaging film which is delamination resistant and can be oriented without requiring addition of processing aids or plasticizers to the polyester:nylon core layer. Preferably the blend layer will be free of such processing aids or plasticizers.

Typical layer thicknesses for the inventive film may be about 18% first blend layer, 2% first adhesive layer, 20% optional layer of e.g. OPP, and 60% second outer layer, although films with differing layer ratio thicknesses are possible. The function of the heat seal layer is to provide a surface which is heat sealable to itself (or to the second outer layer where a lap seal is desired) on commercially available equipment and (for food packaging) to provide a hygienic surface for contact with the foodstuff which is typically a cheese, such as a semi-soft or semi-hard or hard cheese and especially a CO₂ respiring cheese such as edam, gouda or emmental (swiss). It is important that this heat sealable layer be continuous, e.g., over the inner surface of the tube, and that it be extruded at a sufficient thickness to allow heat sealing.

By the term "heat sealing layer" is meant a layer which is heat sealable to itself, i.e., capable of fusion bonding by conventional indirect heating means which generate sufficient heat on at least one film contact surface for conduction to the contiguous film contact surface and formation of a bond interface therebetween without loss of the film integrity. Advantageously, the bond interface must be sufficiently thermally stable to prevent gas or liquid leakage therethrough when exposed to above or below ambient temperatures during processing of food within the tube when sealed at both ends, i.e., in a sealed bag form. Finally, the bond interface between contiguous inner layers must have sufficient physical strength to withstand the tension resulting from stretching or shrinking due to the food body sealed within the tube.

The first outer layer especially as the inner layer of a tube according to the present invention also provides good machinability and facilitates passage of the film over equipment (e.g., for inserting foodstuffs such as cheese). This layer may be coated with an antiblock powder. Also, conventional antiblock additives, polymeric plasticizers, or slip agents may be added to the first outer layer of the film or it may be free from such added ingredients. In one embodiment of the invention the first outer layer consists essentially of an EVA copolymer.

Advantageously, the blend layer functions as a controlled gas barrier, and provides the desired CO₂ and O₂ permeabilities for the article (e.g., foodstuff) to be packaged. It should also provide good optical properties when stretch oriented and annealed, including low haze and a stretching behavior compatible with the layers around it for ease of orientation.

The outer layer which may be the blend polyester:nylon layer provides mechanical strength, abrasion resistance and resists burn through during heat sealing. This outer layer is typically sufficiently thick to provide support and impart strength to the packaging film wall in order to withstand the shrinking operation, handling pressures, abrasion, and packaging with a foodstuff such as cheese.

The heat seal layer comprises a polyolefin and advantageously, it may comprise a polyethylene, i.e., an ethylene homopolymer or a copolymer of ethylene with a minor proportion of one or more alpha-olefins, which may provide a water vapor barrier which resists moisture permeation. High moisture barrier properties are desirable to avoid weight loss and undesirable drying of the cheese which may deleteriously affect the desired cheese sensory properties including texture, mouth feel, taste and appearance.

The multilayer film of the invention may be made by conventional processes including, e.g., slot cast or blown film processes, but preferably will be made by an orientation process, especially under conditions to produce a biaxially stretched film. Nonshrink films according to the present invention are preferred to package cheese but also may be used as overwraps, stretch wraps or as industrial plastic wrap. Shrink films according to the present invention may be used in value added applications. For example, a packaged foodstuff such as cheese having a heat shrinkable film enclosure according to the invention will advantageously cling to the foodstuff even after opening. Non-shrink bags have a tendency to fall away from the sides of the enclosed product (e.g., cheese) once the vacuum is broken by either intentional or accidental opening which can be an advantage or disadvantage depending upon the application; this is an advantage for the smaller retail prepackaged chunks and slices especially shingle packs of respiring cheese.

The film of this invention may be manufactured by coextrusion of all layers simultaneously for example as described in U.S. Patent No. 4,448,792 (Schirmer) or by a coating lamination procedure such as that described in U.S. Patent No. 3,741,253 (Brax et al.) to form a relatively thick primary multilayer extrudate either as a flat sheet or, preferably, as a tube. This sheet or tube is oriented by stretching at orientation temperatures which are generally below the melting points for the predominant resin comprising each layer oriented. Stretch orientation may be accomplished by various known methods, e.g., tentering which is commonly employed to orient sheets, or by the well-known trapped bubble or double bubble technique for orienting tubes as for example described in U.S. Patent No. 3,456,044 (Pahlke). In this bubble technique an extruded primary tube leaving a tubular extrusion die is cooled, collapsed and then preferably oriented by reheating and inflating to form an expanded secondary bubble which is again cooled and collapsed. Preferred films are biaxially stretched and annealed by application of heat under dimesionally controlled conditions to produce a dimensionally stable film. Transverse direction (TD) orientation is accomplished by the above noted inflation to radially expand the heated film which is cooled to set the film in an expanded form. Machine direction (MD) orientation is preferably accomplished with the use of sets of nip rolls rotating at different speeds to stretch or draw the film tube in the machine direction thereby causing machine direction elongation which is set by cooling. Orientation may be in either or both directions. Preferably, a primary tube is simultaneously biaxially stretched radially (transversely) and longitudinally (machine direction) to produce a multilayer film. The stretch ratio during orientation should be sufficient to provide a film with a total thickness of less than 4.0 mils. The MD stretch ratio is typically 2-6 and the TD stretch ratio is also typically 2-6. An overall stretch ratio (MD stretch multiplied by TD stretch) of about 4x-36x is suitable.

The preferred method for forming the multilayer film is extrusion of the primary tube which is then biaxially oriented in a manner similar to that broadly described in the aforementioned U.S. Patent No. 3,456,044 where the primary tube leaving the die is inflated by admission of a volume of air, cooled, collapsed, and then preferably oriented by reinflating to form a secondary tube termed a "bubble" with reheating to the film's orientation (draw) temperature range. Machine direction (MD) orientation is produced by pulling or drawing the film tube, e.g., by utilizing a pair of rollers traveling at different speeds and transverse direction (TD) orientation is obtained by radial bubble expansion. The oriented film is set by rapid cooling to produce a heat shrinkable film. In the following examples, a primary tube was extruded and cooled upon exiting the die, e.g., by spraying with tap water. This primary tube was then reheated to the draw temperature (also called the orientation temperature) for biaxial orientation accomplished by an air cushion which was itself heated by transverse flow through a heated porous tube concentrically positioned around the moving primary tube. Cooling was accomplished by means of a concentric air ring.

In a preferred process for making films of the present invention, the resins and any additives are introduced to an extruder (generally one extruder per layer) where the resins are melt plastified by heating and then transferred to an extrusion (or coextrusion) die for formation into a tube. Extruder and die temperatures will generally depend upon the particular resin or resin containing mixtures being processed and suitable temperature ranges for commercially available resins are generally known in the art, or are provided in technical bulletins made available by resin manufacturers. Processing temperatures may vary depending upon other process parameters chosen. However, variations are expected which may depend upon such factors as variation of polymer resin selection, use of other resins e.g. by blending or in separate layers in the multilayer film, the manufacturing process used and particular equipment and other process parameters utilized. Actual process parameters including process temperatures are expected to be set by one skilled in the art without undue experimentation in view of the present disclosure.

As generally recognized in the art, resin properties may be further modified by blending two or more resins together and it is contemplated that various resins may be blended into individual layers of the multilayer film or added as additional layers, such resins include ethylene-unsaturated ester copolymer resins, especially vinyl ester copolymers such as EVAs very low density polyethylene (VLDPE), linear low density polyethylene (LLDPE), low density polyethylene (LDPE), high density polyethylene (HDPE), nylons, ionomers, polypropylene or other esters. These resins and others may be mixed by well known methods using commercially available tumblers, mixers or blenders. Also, if desired, well known additives such as processing aids, slip agents, antiblocking agents, pigments, etc., and mixtures thereof may be incorporated into the film.

It will be seen from the following description that the film of this invention provides a controlled carbon dioxide (CO₂) permeability of between about 75 to 600 cm³/m² measured at 5° C., 0% relative humidity, for 24 hours at 1 atmosphere and relatively low oxygen transmission rate which is preferably less than 800 cm³/m² at 23° C. for 24 hours at 1 atmosphere and 0% relative humidity.

The polyester:nylon blend layer will control the oxygen permeability of the film. For hard or semi-hard respiring cheese packaging, the oxygen (O₂) permeability desirably should be minimized. Typical films will have an O₂ permeability of less than about 800 cm³/m² for a 24 hour period at 1 atmosphere, 0% relative humidity and 23° C., and preferably less than 300 cm/m². For the blends of the present invention the O₂ transmission rate (0₂GTR) does increase as the CO₂ rate increases although not to the same degree. For the desired CO₂ permeabilities it has been found than an O₂ transmission rate (permeability) of at least about 40 cm³/m² at 24 hours, 1 atmosphere 0% relative humidity and at 23° C. is required, for medium high or higher CO₂ permeability the O₂GTR will preferably be greater than 75 cm³/m² for 24 hours at 1 atmosphere, 0% relative humidity and 23° C., and for high CO₂ permeability films the O₂ permeability rate will preferably be at least 150 cm³/m² or greater.

These former performance levels (<800 cm³/m² and <300 cm³/m²) are desirable for packaging foodstuffs such as cheeses which are susceptible to contamination with undesirable molds which flourish in the presence of oxygen.

The following are examples given to illustrate the present invention.

Experimental results of the following examples are based on tests similar to the following test methods unless noted otherwise.

Tensile Strength: ASTM D-882, Method A
% Elongation: ASTM D-882. Method A
Haze: ASTM D-1003-52
Gloss: ASTM D-2457, 45° angle
1 % Secant Modulus: ASTM D-882, Method A
Oxygen Gas Transmission Rate (O₂GTR): ASTM D-3985-81
Water Vapor Transmission Rate (WVTR): ASTM F 1249-90
Elmendorf Tear Strength: ASTM D-1992
Gauge: ASTM D-2103
Melt Index: ASTM D-1238, Condition E (190°)
Melting point: ASTM D-3418, DSC with 5° C. /min heating rate
Carbon Dioxide Gas Transmission Rate (CO₂GTR): Carbon dioxide gas permeability of film was measured by using an infrared sensor and recorder which is available under the trademark Permatran C-IV by Mocon Testing of Minneapolis, Minnesota, U.S.A. Each tubular film is cut open to form a flattened sheet. A single thickness of each film sheet is clamped between upper and lower halves of a diffusion cell having dimensions defining a 50 cm² test area. Carbon dioxide gas (100%) is placed into the upper halve of the diffusion cell. A nitrogen carrier gas, which is free of carbon dioxide, is flushed into the bottom halve of the diffusion cell. This cell is then connected to an infrared sensor and pump creating a closed loop for circulation of the trapped nitrogen carrier gas. The infrared sensor monitors increases in concentration of CO₂ as carbon dioxide diffuses through the test film into the closed loop of nitrogen gas, and presents a voltage trace on a strip chart recorder. This trace represents the amount of carbon dioxide diffusing. The carbon dioxide gas transmission rate is derived from the slope of the voltage trace; the instrument having been calibrated by recording voltage changes which correspond to measured amounts of CO₂ injected into the instrument.

Shrinkage Values: Shrinkage values are defined to be values obtained by measuring unrestrained shrink at 90° C. (or the indicated temperature if different) for five seconds. Four test specimens are cut from a given sample of the film to be tested. The specimens are cut into squares of 10 cm length in the machine direction by 10 cm. length in the transverse direction. Each specimen is completely immersed for 5 seconds in a 90° C. (or the indicated temperature if different) water bath (or silicone oil if the test temperature is greater than 100° C.). The specimen is then removed from the bath and the distance between the ends of the shrunken specimen is measured for both the M.D. and T.D. directions. The difference in the measured distance for the shrunken specimen and the original 10 cm. side is multiplied by ten to obtain the percent of shrinkage for the specimen in each direction. The shrinkage for the four specimens is averaged for the M.D. shrinkage value of the given film sample, and the shrinkage for the four specimens is averaged for the TD shrinkage value.

Gassing Test: The Gassing Test is an evaluation of film adherence to a vacuum packaged respiring natural cheese. In this test a rectangular block of respiring natural cheese is vacuum packaged in a film which is hermetically sealed. Due to microbiological activity many natural cheeses such as emmental (swiss) respire or give off CO₂. Therefore, over time CO₂ gas will build up in a sealed film package unless the film is permeable to CO₂. This build up of gas will inflate the sealed package if the rate of CO₂ generation is greater than the rate of permeability CO₂ through the film wall. The amount of inflation will depend upon both the gas production rate and the film permeability or gas transmission rate. Film adherence to the surface of the packaged cheese is visually evaluated and given a numerical value from 0 to 10, with greater value numbers indicating less adherence and more ballooning. 0 = complete film adherence to the cheese product. 5 = film ballooned on flat sides, but product corners and edges in contact with film, 7 = film ballooned away from all surfaces except corners, 10 = complete film ballooning away from all product surfaces including flat sides, edges and corners. The same person evaluates all packages in a test to ensure accuracy. Evaluations are made over time and the time elapsed for each evaluation is reported, generally in days. The packaged cheeses are all held at about 35° F. (-2° C.) over the evaluation period. Standard deviation for multiple examples may be reported as may differences (Î) in values for particular packages from one test evaluation over time to the next evaluation.

Following are examples and comparative examples given to illustrate the invention.

In all the following examples, unless otherwise indicated, the film compositions were produced generally utilizing the apparatus and method described in U.S. Pat. No. 3,456,044 (Pahlke) which describes a coextrusion type of double bubble method and in further accordance with the detailed description above. All percentages are by weight unless indicated otherwise.

### Example 1

The first polymeric layer comprised a blend of 90% (by weight relative to the total weight of the first layer) of polyethylene terephthalate having a crystalline density of 1.4 g/cm³, a melting point of 250° C., which is sold under the trademark VORIDIAN™ PET 9663 from Eastman Chemical Company, Kingsport, Tennessee, U.S.A., 9% (by weight relative to the total weight of the first layer) poly(m-xylyleneadipamide) and 1 % (by weight relative to the total weight of the first layer) process additives. The first layer had a thickness of approximately 0.06 mil. and was adhesive laminated using a two-part adhesive to second layer of biaxially oriented polypropylene having a thickness of about 0.05 mil. In Example 1, a third layer of ethylene vinyl acetate copolymer having an approximate thickness of 1.5 mil. was then extrusion coated onto the second layer of the two-layer adhesive laminate. The ethylene vinyl acetate copolymer comprised 18% (by weight) vinyl acetate content, a density of 0.94 g/ cm³, a melt index of 30g/10 min., a Vicat Softening point of 54° C., a melting point of 84° C., and is sold under the trademark DuPont™ ELVAX® 3176 from the DuPont Chemical Company, Wilmington, Delaware U.S.A.

### Example 2

Polyethylene terephthalate supplied as grade 9663 by Voridian, a business unit of Eastman Chemical Company, Kingsport, TN, served as the PET component of the blend. MXD6 grade RENY 6007, provided by Mitsubishi Gas Chemical Company, Inc., Tokyo, Japan was the polyamide used in the blend. An antiblocking agent was used to controllably roughen the film surface and provide for an appropriate COF of the finished film product.

The Voridian 9663 PET was dried at about 160°C to a water content of less than 50 ppm using desiccated air with a dew point of about -34°C. The Mitsubishi Gas Chemical RENY 6007 MXD6 was supplied dry but nonetheless was further dried at about 65°C with desiccated air. The antiblocking agent was not dried prior to processing.

The PET, MXD6 and antiblocking agent were delivered to a tumble blender in batches of about 25 kg in a ratio of 90:9.5:0.5. The dried resins were measured gravimetrically and automatically delivered to the blender without exposure to the ambient atmosphere. Following tumble blending, the PET, MXD6 and antiblocking agent mixture was automatically delivered directly to a 100 mm, 24:1 single screw extruder. The extruder melted and mixed the blend, pumped it through a wire mesh screen filter and delivered the melt to a die. The die was shaped such that it formed a continuous, annular flow of the molten polymer blend. The temperature of the molten polymer blend was approximately 280°C at the die exit.

Almost immediately after exiting the die, the molten polymer blend was cooled by a water-chilled quenching device to form a continuous tube. The thickness of the tube was about 140 µ. The tube was flattened by a pair of nip rolls and advanced at a speed of about 10 m/min. The flattened tube was subsequently reformed into an annulus, heated by infrared radiation to about 95°C and inflated with pressurized air. The inflation increased the circumferential dimension of the tube by a factor of about 3.9. Simultaneously with the inflation, the tube was drawn axially by a factor of about 3.6. Thus, the resultant overall thickness change of the tube was about 14 times to yield a stretched thickness of about 10 µ.

The continuous, biaxially stretched tube was flattened and fed into a heated oven to anneal or thermally fix it. The oven temperature was about 225°C. The continuous tube was restrained circumferentially and axially as it traveled through the oven. The circumferential restraint did allow for some reduction in tube width such that the final circumferential expansion factor was about 3.1. The axial restraint reduced the advancement speed of the tube at the exit of the oven relative to the speed at the entrance of the oven such that the final axial expansion factor was about 3.0. The overall dimension change of the continuous tube at the exit of the oven versus the prestretched tube was about 9.3 times. Thus, the final tube thickness was about 15 µ. It will be appreciated by those skilled in the art that alternatively, the continuous, biaxially stretched tube can be flattened to a thickness of about 15 µ and may be further processed without heat annealing to provide a heat shrinkable film.

The advancing, 15 µ thick flattened tube was slit at each edge to yield two separate continuous films. One surface of each film was subjected to a sufficiently energetic corona discharge such that its surface energy was raised to at least 56 dyne/cm. At this point, the advancing films were wound into two separate rolls.

The oxygen transmission rate for the 15 µ thick film was measured using an OX-TRAN 2/20 (Modern Controls (MOCON), Minneapolis) according to ASTM D3985. Two representative measurements demonstrated permeabilities of 51.9 cm³/(m² · d) and 53.8 cm³/(m² . d) at 23°C and 80% RH. The desired permeability target range was 46.0 - 62.0 cm³/(m² · d) so that goal was achieved. The achieved oxygen transmission rate range is approximately equivalent to that given by 15 µ thick biax nylon when measured at 0 % RH. To accommodate the increase in permeability of nylon at high humidity, the thickness of the nylon film would have to increase to provide corresponding oxygen permeation resistance.

The flex crack resistance of the film was measured using a Gelbo Flex testing device (Packaging Materials Labs, Inc., Philadelphia) according to ASTM F392.

### Example 3

Manufacture of a film was carried-out identically by the method described in the previous example. The composition of the film was adapted to improve the flex crack resistance of the film. To this end, a blend of Mitsubishi RENY 6007 MXD6 and an atactic propylene ethylene copolymer supplied by Eastman Chemical Company as Eastoflex D-180 was made as described above. The specific composition of the blend was 90 % MXD6 and 10 % atactic propylene ethylene copolymer. The pelletized blend was prepared by melt mixing the two components in a 50 mm, co-rotating twin screw extruder, forming continuous strands with an appropriately-shaped die, cooling the strands in a water bath, removing excess water with an air knife and chopping the strands into pellets with a rotating knife-style pelletizer.

Film was made that included the MXD6/atactic propylene ethylene copolymer blend essentially according to the method described above. The composition of the film was 89.5 % Voridian 9663 PET, 10 % MXD6/atactic propylene ethylene copolymer blend, 0.5 % antiblocking agent.

Gelbo Flex testing showed that the incorporation of the atactic propylene ethylene copolymer substantially improved the flex crack resistance of the film.

It is expected that materials other than the specific propylene ethylene copolymer used in this example will substantially improve the flex crack resistance of the PET/semiaromatic polyamide blends. In fact, based on other work, many dispersed materials that exhibit a glass transition temperature that is lower than the ambient temperature will favorably affect flex crack resistance.

Referring to the Drawing, Fig 1 depicts a schematic drawing illustration a cross section of a multilayer film 10 according to the present invention. Inventive film 10 has a first heat sealing layer 11, an optional second functional layer 12 to provide, e.g., flex crack resistance which may be e.g. oriented polypropylene (OPP), an optional third adhesive layer 13 and a fourth layer 14 comprising a blend of polyester and MXD6.

Thus the polyester:nylon blend film manufactured according to the present invention may be joined to other materials in order to form a packaging construction appropriate for packaging a food product. It is envisioned that the completed package structure in a preferred embodiment may comprise at least four film layers in the following configuration:
polyester:MXD6|LDPE|BOPP|EVA
With respect to the Figure, these layers would correspond to layers 14, 13, 12 and 11.

The completed structure may be formed into packages, filled with a food product like Swiss cheese.

## Claims

1. A heat shrinkable multilayer cheese packaging film (10) having a thickness of less than 254µm (10 mils) and comprising a first outer polyolefin heat sealing layer (11); and
a second layer (14) comprising a blend of at least 50 wt.% of polyester and 5-15 wt. % of MXD6 based on the weight of the second layer,
wherein said film (10) has at least 10% shrink in both transverse and machine directions at 90°C.

2. A film (10) as claimed in claim 1, wherein said film (10) has at least 30% shrink in both transverse and machine directions at 90°C.

3. A film (10) as claimed in any preceding claim, wherein said polyester comprises poly(ethylene terephthalate) homopolymer or copolymer.

4. A film (10) as claimed in any preceding claim, wherein said polyester is present in an amount of at least 75 wt. %.

5. A film (10) as claimed in claim 4, wherein said polyester is present in an amount of at least 85 wt. %.

6. A film (10) as claimed in any preceding claim, wherein said first layer (11) comprises EVA, VLDPE, EAA, or an ethylene-a-olefin copolymer having at least 80% of its polymeric units derived from ethylene, or blends thereof.

7. A film (10) as claimed in any preceding claim, further comprising at least one adhesive layer (13).

8. A film (10) as claimed in claim 7, wherein said adhesive layer (13) comprises an anhydride modified polyolefin, optionally blended with EVA.

9. A film (10) as claimed in any preceding claim, further comprising at least one additional layer (12) comprising polypropylene, a propylene ethylene copolymer, ionomer, nylon, polyethylene, an ethylene vinyl ester, a polyolefin, a LLDPE, an LMDPE, a LDPE, an HDPE, an elastomer, a plastomer, or blends of one or more thereof.

10. A film (10) as claimed in any preceding claim, wherein said film (10) has a CO₂GTR of at least 250cm³/m² at 24 hours, at 1 atmosphere, at 20°C and 0% relative humidity.

11. A film (10) as claimed in any preceding claim, wherein said film (10) has a CO₂GTR of at least 100cm³/m² at 24 hours, at 1 atmosphere, at 5°C and 0% relative humidity.

12. A film (10) as claimed in claim 11, wherein said film (10) has a CO₂GTR of at least 400cm³/m² at 1 atmosphere, at 24 hours, at 5°C and 0% relative humidity.

13. A film (10) as claimed in claim 11, wherein said film (10) has a CO₂ gas transmission rate of between 100 to 600cm³/m² at 24 hours, at 1 atmosphere, 0% relative humidity and at 5°C.

14. A film (10) as claimed in any preceding claim, wherein said film (10) has a haze value of less than 10%.

15. A film (10) as claimed in any preceding claim, wherein said film (10) has a gloss at 45°C which is greater than 65 H.U.

16. A film (10) as claimed in any preceding claim, wherein said film (10) is labelled to indicate that it is for use in packaging cheese.

17. A film (10) as claimed in any preceding claim, wherein said film (10) has an O₂ gas transmission rate of 10cm³/m² or higher at 24 hours, 1 atmosphere, 0% relative humidity and 5°C.

18. A packaged cheese comprising a respiring cheese encased in a hermetically sealed heat shrinkable film (10) comprising a first polyolefin layer (11) and a second layer (14) comprising a blend of polyester with 5 to 15 weight % MXD6, wherein said film (10) has at least 10% shrink in both transverse and machine directions at 90°C.

19. A packaged cheese as claimed in claim 18, wherein said film (10) is a film as claimed in any of claims 1 to 17.

20. A packaged cheese as claimed in claim 18 or claim 19, wherein said cheese is selected from emmental, gouda or edam.

## Patentansprüche

1. Wärmeschrumpfbare mehrschichtige Käseverpackungsfolie (10) mit einer Dicke von weniger als 254 µm (10 Mil), die eine erste äußere Polyolefinverschweißschicht (11); und
eine zweite Schicht (14) aufweist, die eine Mischung aus wenigstens 50 Gewichtsprozent Polyester und 5-15 Gewichtsprozent MXD6 basierend auf dem Gewicht der zweiten Schicht aufweist,
wobei die Folie (10) bei 90°C wenigstens 10% Schrumpfung sowohl in der Quer- als auch der Längsrichtung aufweist.

2. Folie (10) nach Anspruch 1, wobei die Folie (10) bei 90°C wenigstens 30% Schrumpfung sowohl in der Quer- als auch der Längsrichtung aufweist.

3. Folie (10) nach einem vorhergehenden Anspruch, bei der das Polyester Poly(ethylenterephthalat)-Homopolymer oder Copolymer aufweist.

4. Folie (10) nach einem vorhergehenden Anspruch, bei der Polyester in einer Menge von wenigstens 75 Gewichtsprozent vorhanden ist.

5. Folie (10) nach Anspruch 4, bei der Polyester in einer Menge von wenigstens 85 Gewichtsprozent vorhanden ist.

6. Folie (10) nach einem vorhergehenden Anspruch, bei der die erste Schicht (11) EVA, VLDPE, EAA oder ein Ethylen-a-Olefincopolymer, bei dem wenigstens 80% seiner Polymereinheiten von Ethylen abgeleitet sind, oder Mischungen daraus aufweist.

7. Folie (10) nach einem vorhergehenden Anspruch, die weiter wenigstens eine Klebstoffschicht (13) aufweist.

8. Folie (10) nach Anspruch 7, wobei die Klebstoffschicht (13) ein anhydridmodifiziertes Polyolefin, wahlweise mit EVA gemischt aufweist.

9. Folie (10) nach einem vorhergehenden Anspruch, die weiter wenigstens eine zusätzliche Schicht (12) aufweist, die Polyproylen, ein Propylenethylencopolymer, Ionomer, Nylon, Polyethylen, ein Ethylenvinylester, ein Polyolefin, ein LLDPE, ein LMDPE, ein LDPE, ein HDPE, ein Elastomer, ein Plastomer, oder Mischungen von einem oder mehreren derselben aufweist.

10. Folie (10) nach einem vorhergehenden Anspruch, wobei die Folie (10) eine CO₂GTR [Gasdurchlässigkeit] von wenigstens 250 cm³/m² in 24 Stunden, bei 1 Atmosphäre, bei 20°C und bei 0% relativer Feuchtigkeit aufweist.

11. Folie (10) nach einem vorhergehenden Anspruch, wobei die Folie (10) eine CO₂GTR von wenigstens 100 cm³/m² in 24 Stunden, bei 1 Atmosphäre, bei 5°C und 0% relativer Feuchtigkeit aufweist.

12. Folie (10) nach Anspruch 11, wobei die Folie (10) eine CO₂GTR von wenigstens 400 cm³/m², bei 1 Atmosphäre, in 24 Stunden, bei 5°C und 0% relativer Feuchtigkeit aufweist.

13. Folie (10) nach Anspruch 11, wobei die Folie (10) eine CO₂-Gasdurchlässigkeit von zwischen 100 bis 600 cm³/m² in 24 Stunden, bei 1 Atmosphäre, 0% Feuchtigkeit und bei 5°C aufweist.

14. Folie (10) nach einem vorhergehenden Anspruch, wobei die Folie (10) einen Trübungswert unter 10% aufweist.

15. Folie (10) nach einem vorhergehenden Anspruch, wobei die Folie (10) einen Glanz bei 45°C aufweist, der größer als 65 H. U. (Hunter Unit) ist.

16. Folie (10) nach einem vorhergehenden Anspruch, wobei die Folie (10) etikettiert ist zum Anzeigen, dass sie zum Gebrauch beim Verpacken von Käse vorgesehen ist.

17. Folie (10) nach einem vorhergehenden Anspruch, wobei die Folie (10) eine O₂-Gasdurchlässigkeit von 10cm³/m² oder höher in 24 Stunden, bei 1 Atmosphäre, 0% relativer Feuchtigkeit und 5°C aufweist.

18. Verpackter Käse, der einen atmenden Käse umschlossen in einer hermetisch versiegelten wärmeschrumpfbaren Folie (10) aufweist, welche eine erste Polyolefinschicht (11) und eine zweite Schicht (14) aufweist, die eine Mischung aus Polyester mit 5 bis 15 Gewichtsprozent MXD6 aufweist, wobei die Folie (10) wenigstens 10% Schrumpfung sowohl in der Quer- als auch der Längsrichtung bei 90°C aufweist.

19. Verpackter Käse nach Anspruch 18, bei dem die Folie (10) eine Folie nach einem der Ansprüche 1 bis 17 ist.

20. Verpackter Käse nach Anspruch 18 oder Anspruch 19, wobei der Käse aus Emmentaler, Gouda oder Edamer ausgewählt ist.

## Revendications

1. Film d'emballage pour le fromage, à plusieurs couches, thermo-rétrécissable (10) ayant une épaisseur inférieure à 254 µm (10 mil) et comprenant une première couche extérieure thermo-soudable de polyoléfine (11) ; et
une deuxième couche (14) comprenant un mélange d'au moins 50 % en poids de polyester et 5 - 15 % en poids de MXD6, par rapport au poids de la deuxième couche,
dans lequel ledit film (10) présente un rétrécissement d'au moins 10 % à la fois dans les sens travers et machine à 90 °C.

2. Film (10) selon la revendication 1, dans lequel ledit film (10) présente un rétrécissement d'au moins 30 % à la fois dans les sens travers et machine à 90 °C.

3. Film (10) selon l'une quelconque des revendications précédentes, dans lequel ledit polyester comprend un homopolymère ou un copolymère de poly(téréphtalate d'éthylène).

4. Film (10) selon l'une quelconque des revendications précédentes, dans lequel ledit polyester est présent dans une quantité d'au moins 75 % en poids.

5. Film (10) selon la revendication 4, dans lequel ledit polyester est présent dans une quantité d'au moins 85 % en poids.

6. Film (10) selon l'une quelconque des revendications précédentes, dans lequel ladite première couche (11) comprend de l'EVA, du VLDPE, de l'EAA ou un copolymère éthylène-α-oléfine comprenant au moins 80 % de motifs polymères dérivés de l'éthylène ou des mélanges de ceux-ci.

7. Film (10) selon l'une quelconque des revendications précédentes, comprenant en outre au moins une couche adhésive (13).

8. Film (10) selon la revendication 7, dans lequel ladite couche adhésive (13) comprend une polyoléfine modifiée par un anhydride, éventuellement mélangée avec de l'EVA.

9. Film (10) selon l'une quelconque des revendications précédentes, comprenant en outre au moins une couche supplémentaire (12) comprenant du polypropylène, un copolymère propylène-éthylène, un ionomère, du nylon, du polyéthylène, un vinylester d'éthylène, une polyoléfine, un LLDPE, un LMDPE, un LDPE, un HDPE, un élastomère, un plastomère, ou des mélanges de deux d'entre eux ou plus.

10. Film (10) selon l'une quelconque des revendications précédentes, dans lequel ledit film (10) a un GTR de CO₂ d'au moins 250 cm³/m² en 24 heures, sous 1 atmosphère, à 20 °C et sous une humidité relative de 0 %.

11. Film (10) selon l'une quelconque des revendications précédentes, dans lequel ledit film (10) a un GTR de CO₂ d'au moins 100 cm³/m² en 24 heures, sous 1 atmosphère, à 5 °C et sous une humidité relative de 0 %.

12. Film (10) selon la revendication 11, dans lequel ledit film (10) a un GTR de CO₂ d'au moins 400 cm³/m² en 24 heures, sous 1 atmosphère, à 5 °C et sous une humidité relative de 0 %.

13. Film (10) selon la revendication 11, dans lequel ledit film (10) a un taux de transmission de gaz de CO₂ compris entre 100 et 600 cm³/m² en 24 heures, sous 1 atmosphère, à 5 °C et sous une humidité relative de 0 %.

14. Film (10) selon l'une quelconque des revendications précédentes, dans lequel ledit film (10) a une valeur de voile inférieure à 10 %.

15. Film (10) selon l'une quelconque des revendications précédentes, dans lequel ledit film (10) a un brillant à 45 °C qui est supérieur à 65 H.U.

16. Film (10) selon l'une quelconque des revendications précédentes, dans lequel ledit film (10) est marqué pour indiquer qu'il est destiné à une utilisation pour l'emballage de fromage.

17. Film (10) selon l'une quelconque des revendications précédentes, dans lequel ledit film (10) a un taux de transmission de gaz de O₂ de 10 cm³/m² ou plus en 24 heures, sous 1 atmosphère, à 5 °C et sous une humidité relative de 0 %.

18. Fromage emballé comprenant un fromage qui respire logé dans un film thermo-rétrécissable, fermé hermétiquement (10) comprenant une première couche de polyoléfine (11) et une deuxième couche (14) comprenant un mélange de polyester avec 5 à 15 % en poids de MXD6, dans lequel ledit film (10) présente un rétrécissement d'au moins 10 % à la fois dans les sens travers et machine à 90 °C.

19. Fromage emballé selon la revendication 18, dans lequel ledit film (10) est un film selon l'une quelconque des revendications 1 à 17.

20. Fromage emballé selon la revendication 18 ou la revendication 19, dans lequel ledit fromage est choisi parmi l'emmental, le gouda ou l'edam.
